# EUROPEAN PATENT APPLICATION

(11) **EP 1 168 736 A1**
(43) Date of publication of application: **02.01.2002**
(21) Application number: 00440196.4
(22) Date of filing: 30.06.2000
(51) Int. Cl.: H04L 12/64

(54) **Telecommunication system and method with a speech recognizer**

(71) Applicant: ALCATEL, 75008 Paris (FR)
(72) Inventor: Kopp, Dieter, 75328 Illingen (DE); Noè, Bernard, 70736 Fellbach (DE); Sienel, Jürgen, 71229 Leonberg (DE); Knoblich, Ulf, 55765 Birkenfeld (DE)
(74) Representative: van Bommel, Jan Peter

(57) **Abstract**

Telecommunication systems comprising a terminal for speech communication and a network with a speech recognizer may couple said terminal and said network via a packet-switched coupling, whereby said terminal is provided with a detector system for detecting voice activity in audio signals and with a processing unit for processing audio signals and with a buffer for buffering processed audio signals for generating information blocks to be sent to said network, and said network is provided with a network-generator for generating further information blocks and with a network-combiner for combining said information blocks with said further information blocks for creating an information stream for said speech recognizer. Preferably, in said detector system, processed audio signals or threshold signals representing differences between processed audio signals or indication signals are used for forming information blocks.

## Description

The invention relates to a telecommunication system comprising a terminal for speech communication and comprising a network with a speech recognizer coupled via a coupling to said terminal, with said terminal comprising a man-machine-interface for converting audio into audio signals.

Such a telecommunication system is known in the form of a telecommunication network for fixed and/or mobile communication, with said terminal being a fixed (PSTN, ISDN etc.) terminal (telephone, screenphone, pc etc.) or a wireless (cordless: DECT etc.) or a mobile (GSM, UMTS etc.) terminal (wireless handset etc.), with said man-machine-interface for example comprising a microphone for receiving audio, a loudspeaker for generating further audio, a keyboard and a display, and with said speech recognizer being of common general knowledge and available on the market.

Such a telecommunication system is disadvantageous, inter alia, due to being inefficient.

It is an object of the invention, inter alia, to provide a telecommunication system as described in the preamble, which is more efficient.

Thereto, the telecommunication system according to the invention is characterised in that said coupling comprises a packet-switched coupling, with said terminal comprising a detector system coupled to said man-machine-interface for detecting voice activity in audio signals and comprising a processing unit coupled to said man-machine-interface for processing audio signals and comprising a buffer coupled to said processing unit for buffering processed audio signals for generating information blocks to be sent to said network, and with said network comprising a network-generator for generating further information blocks and comprising a network-combiner for combining said information blocks with said further information blocks for creating an information stream for said speech recognizer.

By introducing a packet-switched coupling, the efficieny of the telecommunication system is increased a lot. To make speech recognition possible via such a packet-switched coupling, in said terminal, said detector system and said processing unit (like for example a speech coder or a PCM coder or an ADPCM coder) and said buffer are introduced, and in said network, said network-generator and said network-combiner are introduced.

The invention is based on the insight, inter alia, that packet-switching is more efficient than circuit-switching.

The invention solves the problem, inter alia, of increasing the efficiency of the telecommunication system.

A first embodiment of the telecommunication system according to the invention is characterised in that said detector system comprises a voice activity detector for generating voice activity signals and comprises a threshold detector for generating threshold signals representing differences between processed audio signals and comprises a terminal-generator for generating indication signals and comprises a processor for receiving said voice activity signals and said threshold signals and for in response forming information blocks of processed audio signals or threshold signals or indication signals.

By introducing, in said detector system, said voice activity detector and said threshold detector and said terminal-generator, processed audio signals or threshold signals or indication signals are used for defining the audio received by said terminal, which is very efficient.

Of these three kinds of signals (processed audio signals or threshold signals or indication signals) said indication signals could be avoided, resulting in a further increased efficiency and in less communication between the sending side and the receiving side, as a consequence of which at said receiving side synchronisation must be realised differently or is no longer realised at all, and said receiving side is less informed about said sending side.

A second embodiment of the telecommunication system according to the invention is characterised in that said processing unit comprises a preprocessing unit for preprocessing audio signals, with said network comprising a final processing unit for final processing said preprocessed audio signals.

By introducing distributed speech recognition, the efficiency of the system is further increased.

The invention further relates to a terminal for use in a telecommunication system comprising said terminal for speech communication and comprising a network with a speech recognizer coupled via a coupling to said terminal, with said terminal comprising a man-machine-interface for converting audio into audio signals.

The terminal according to the invention is characterised in that said coupling comprises a packet-switched coupling, with said terminal comprising a detector system coupled to said man-machine-interface for detecting voice activity in audio signals and comprising a processing unit coupled to said man-machine-interface for processing audio signals and comprising a buffer coupled to said processing unit for buffering processed audio signals for generating information blocks to be sent to said network .

A first embodiment of the terminal according to the invention is characterised in that said detector system comprises a voice activity detector for generating voice activity signals and comprises a threshold detector for generating threshold signals representing differences between processed audio signals and comprises a terminal-generator for generating indication signals and comprises a processor for receiving said voice activity signals and said threshold signals and for in response forming information blocks of processed audio signals or threshold signals or indication signals.

A second embodiment of the terminal according to the invention is characterised in that said processing unit comprises a preprocessing unit for preprocessing audio signals.

The invention yet further relates to a network for use in a telecommunication system comprising a terminal for speech communication and comprising a network with a speech recognizer coupled via a coupling to said terminal.

The network according to the invention is characterised in that said coupling comprises a packet-switched coupling, with said terminal being adapted to send information blocks to said network, and with said network comprising a network-generator for generating further information blocks and comprising a network-combiner for combining said information blocks with said further information blocks for creating an information stream for said speech recognizer.

The invention also further relates to detector system for use in a terminal for speech communication which terminal comprises a man-machine-interface for converting audio into audio signals.

The detector system according to the invention is characterised in that said terminal comprises said detector system coupled to said man-machine-interface for detecting voice activity in audio signals and comprises a processing unit coupled to said man-machine-interface for processing audio signals and comprises a buffer coupled to said processing unit for buffering processed audio signals for generating information blocks to be sent to said network, with said said detector system comprising a voice activity detector coupled to said man-machine-interface for generating voice activity signals and comprising a threshold detector coupled to said processing unit for generating threshold signals representing differences between processed audio signals and comprising a terminal-generator for generating indication signals and comprising a processor for receiving said voice activity signals and said threshold signals and for in response forming information blocks of processed audio signals or threshold signals or indication signals.

The invention also yet further relates to a speech recognizer for use in a network to be coupled via a coupling to a terminal for speech communication.

The speech recognizer according to the invention is characterised in that said coupling comprises a packet-switched coupling, with said terminal being adapted to send information blocks to said speech recognizer, and with said speech recognizer comprising a network-generator for generating further information blocks and comprising a network-combiner for combining said information blocks with said further information blocks for creating an information stream.

The invention finally relates to a method for use in a telecommunication system comprising a terminal for speech communication and comprising a network with a speech recognizer coupled via a coupling to said terminal, with said terminal comprising a man-machine-interface for converting audio into audio signals.

The method according to the invention is characterised in that said coupling comprises a packet-switched coupling, with said method comprising a first step of in said terminal detecting voice activity in audio signals and a second step of in said terminal processing audio signals and a third step of in said terminal buffering processed audio signals for generating information blocks to be sent to said network and a fourth step of in said network generating further information blocks and a fifth step of in said network combining said information blocks with said further information blocks for creating an information stream for said speech recognizer.

Embodiments of the method according to the invention are in correspondence with embodiments of the telecommunication system according to the invention.

The document US 5,809,464 discloses a dictating mechanism based upon distributed speech recognition (DSR). Other documents being related to DSR are for example EP00440016.4 and EP00440057.8. The document EP00440087.5 discloses a system for performing vocal commanding. The document US 5,794,195 discloses a start/end point detection for word recognition. The document US 5,732,141 discloses a voice activity detection. Neither one of these documents discloses the telecommunication system according to the invention. All references including further references cited with respect to and/or inside said references are considered to be incorporated in this patent application.

The invention will be further explained at the hand of an embodiment described with respect to drawings, whereby
figure 1 discloses a telecommunication system according to the invention comprising a terminal according to the invention with a detector system according to the invention and a network according to the invention with a speech recognizer according to the invention, and
figure 2 discloses said speech recognizer according to the invention forming part of said network according to the invention.

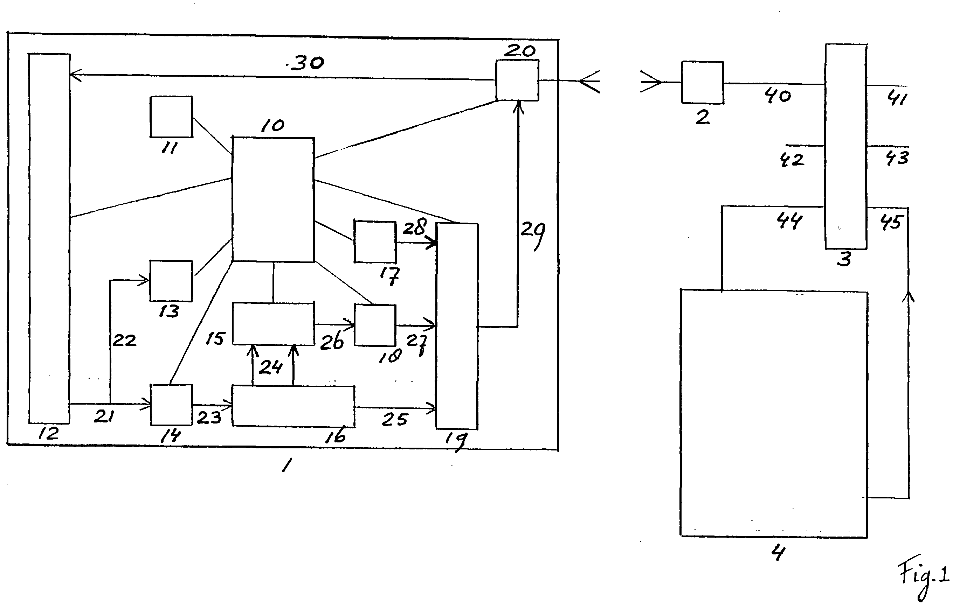

Terminal 1 according to the invention as shown in figure 1 comprises a processor 10, a memory 11, a man-machine-interface 12 (mmi 12), a voice activity detector 13 (VAD 13), a processing unit 14, a comparator 15, a buffer 16, a terminal-generator 17, a threshold detector 18, a selector 19 and a transceiver 20. An output of mmi 12 is coupled via a connection 21 to processing unit 14 and via a connection 22 to VAD 13. An output of processing unit 14 is coupled via a connection 23 to an input of buffer 16. An output of buffer 16 is coupled via a connection 25 to a first input of selector 19. At least two suboutputs of buffer are coupled via connections 24 to inputs of comparator 15, of which an output is coupled to an input of threshold detector 18. An output of threshold detector 18 is coupled via a connection 27 to a second input of selector 19. An output of terminal generator 17 is coupled via a connection 28 to a third input of selector 19, of which an output is coupled via a connection 29 to an input of transceiver 20. An output of transceiver 20 is coupled via a connection 30 to an input of mmi 12, and an input/output of transceiver 20 is coupled to an antennae for wireless communication with a base station 2, which via a connection 40 is coupled to a switch 3. Processor 10 is coupled via control connections to memory 11, mmi 12, VAD 13, processing unit 14, comparator 15, buffer 16, terminal-generator 17, threshold detector 18, selector 19 and transceiver 20. At least processor 10, VAD 13, comparator 15, threshold detector 18 and terminal-generator 17 together form a detector system according to the invention. Switch 3 is coupled via a connection 44 to an input of speech recognizer 4, of which an output via a connection 45 is coupled to switch 3.

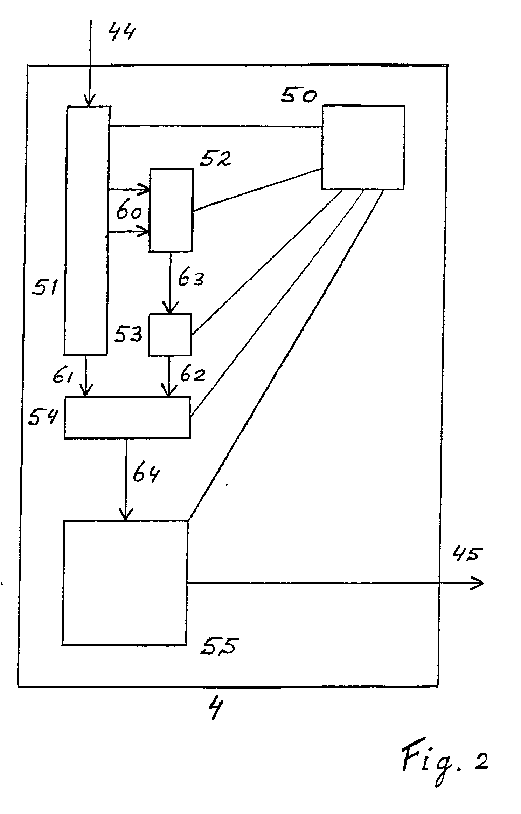

Speech recognizer 4 according to the invention as shown in figure 2 comprises a processor 50 coupled via control connections to a buffer 51 and to a network-detector 52 and to a network-generator 53 and to a network-combiner 54 and to a recognizer 55. An input of buffer 51 is coupled to connection 44, and an output of buffer 51 is coupled via a connection 61 to a first input of network-combiner 54, of which an output is coupled via a connection 64 to an input of recognizer 55, of which an output is coupled to connection 45. Suboutputs of buffer 51 are coupled via connections 60 to inputs of network-detector 52, of which an output is coupled via a connection 63 to an input of network-generator 53, of which an output is coupled via a connection 62 to a second input of network-combiner 54. At least speech recognizer 4 and switch 3 together form a network according to the invention.

The telecommunication system according to the invention as shown in figures 1 and 2 functions as follows.

Mmi 12 (for example comprising a microphone for receiving audio and a loudspeaker for generating further audio and a keyboard and a display) at which a user is generating speech, converts said speech into speech signals, which via connection 21 are supplied to processing unit 14 (for example a speech coder or a PCM coder or a ADPCM coder or a preprocessing unit of a Distributed Speech Recognition system) and via connection 22 are supplied to VAD 13. VAD 13 detects voice activity (for example per frame of 10 or 20 msec.), and processing unit 14 processes said speech signals and generates processed speech signals which via connection 23 are supplied to buffer 16 (for example comprising a shift register for storing for example several frames). Via connections 24, comparator 15 receives at least two different speech signals or at least two different parts of a speech signal (for example of two different frames) and generates a difference signal which via connection 27 is supplied to threshold detector 18, which compares said difference signal with a threshold. Processor 10, all the time monitoring via the control connections what is happening, receives information from VAD 13 about voice activity being there or not, and receives information from comparator 15 about said difference, and receives information from threshold detector 18 about said difference being smaller or larger than (or equal to) said threshold. In case of voice activity being there, processor 10 controls selector 19 (for example a multiplexer) in such a way that said processed speech signals flow via connection 25 to connection 29 and transceiver 20, which sends them in the form of one or more information blocks (each block being one or more packets or a part of a packet) to said network. In case of no voice activity being present, processor 10 takes into account the difference established by comparator 15: in case of said difference being larger than (or equal to - if not chosen below when said difference is smaller) said threshold, said difference signal as supplied via connection 27 to selector is under control of processor 10 supplied to connection 29 and transceiver 20, which sends it in the form of one or more information blocks (each block being one or more packets or a part of a packet) to said network etc., and in case of said difference being smaller than (or equal to - if not chosen above when said difference is larger) said threshold, processor 10 controls terminal-generator 17 for generating an indication signal per predefined time-interval (for example one indication signal per second, in other words for example one indication signal per 50 to 100 frames) and controls selector 19 in such a way that said indication signal is supplied to connection 29 and transceiver 20, which sends it in the form of one or more information blocks (each block being one or more packets or a part of a packet) to said network etc.

Said information blocks are sent via a packet-switched connection to switch 3 via base station 2 and in switch 3 routed via connection 44 to speech recognizer 4. In speech recognizer 4, said information blocks are buffered in buffer 51 (for example comprising a shift register for storing for example several frames) and processor 50 is informed. Network-detector 52 detects the information blocks one by one or several together (by analysing the content and/or by analysing the header), and informs processor 50 of the result of said detection.

In case of said processed speech signals being present, processor 50 controls network-combiner 54 in such a way that said information blocks are supplied to recognizer 55.

In case of said difference signal being present, for example network-detector 52 supplies said difference signal to network-generator 53 (for example having an interpolation function), which in response generates one or more information blocks to be supplied to network-combiner 54, and processor 50 controls network-combiner 54 in such a way that said one or more information blocks are supplied to recognizer 55, or for example said difference signal flows in the form of one or more information blocks from buffer 51 to network-combiner 54, and processor 50 controls network-combiner 54 in such a way that said one or more information blocks are supplied to recognizer 55.

In case of network-detector 52 detecting for example frame 70 comprising speech and some time later frame 80 comprising speech, processor 50 is informed, which instructs network-generator 53 (having for example said interpolation function) to generate frames 71 to 79 by interpolating the received frames 70 and 80 for example, after which processor 50 controls network-combiner 54 in such a way that subsequently frame 70 in the form of one or more information blocks flows via connection 61 to connection 64, then frames 71-79 each in the form of one or more information blocks flow via connection 62 to connection 64, and finally frame 80 flows via connection 61 to connection 64, to offer recognizer 55 an information stream, which is necessary for recognizing said speech generated at mmi 12. Alternatively, in case of network-detector 52 detecting for example frame 70 and not detecting frame 71 etc., processor 50 is informed, which instructs network-generator 53 (having for example said interpolation function) to generate frames 71 etc. by interpolating the received frame 70 for example, until frame 80 is received and detected, etc.

In case of said indication signal being present, network-detector 52 for example informs processor 50.

Said recognizer 55 for example comprises a final processing unit in case of Distributed Speech Recognition being used.

All embodiments are just embodiments and do not exclude other embodiments not shown and/or described. All examples are just examples and do not exclude other examples not shown and/or described. Any (part of an) embodiment and/or any (part of an) example can be combined with any other (part of an) embodiment and/or any other (part of an) example.

Said terminal, base station and switch can be in accordance with IP based technology (GSM, GPRS, UMTS, etc. Said construction of said terminal and speech recognizer can be amended without departing from the scope of this invention. Parallel blocks can be connected serially, and vice versa, and each bus can be replaced by separate connections, and vice versa. Said units, as well as all other blocks shown and/or not shown, can be 100% hardware, or 100% software, of a mixture of both. Each unit and block can be integrated with a processor or any other part, and each function of a processor can be realised by a separate unit or block. Any part of said speech recognizer can be shifted into said switch, and vice versa, and both can be completely integrated.

For clarity reasons, for example the routing of information has not been discussed, but is of common general knowledge to a person skilled in the art, and for example in terminal 1 between transceiver 20 and mmi 12, further units may be present, serially and/or parallelly, which are of common general knowledge to a person skilled in the art, and for example each unit or block shown may have further functions and/or tasks, like for example buffer 16 also being used for allowing terminal 1 to recognize the beginning of speech and/or to recognize the fact that real speech has been entered, which takes some time, as known to a person skilled in the art.

As will be clear to a person skilled in the art, said indication signal, possibly in the form of one or more information blocks, is just a synchronisation signal and/or a signal for informing the receiving side about nothing going on at the sending side, such a signal of course can be avoided, for example by using other signals for synchronisation or by no longer wanting to synchronise both sides or by no longer wanting to inform said receiving side etc.

Network-combiner 54 is for example controlled by processor 50 in such a way that for example headers and/or parts of the content of information blocks no longer needed for recognizer 55 are cut off. Alternatively, in recognizer 55 said headers and/or parts are cut off. Possible functions of recognizer 55 are, inter alia, name dialling, command & control, dictation etc.

## Claims

1. Telecommunication system comprising a terminal for speech communication and comprising a network with a speech recognizer coupled via a coupling to said terminal, with said terminal comprising a man-machine-interface for converting audio into audio signals, **characterised in that** said coupling comprises a packet-switched coupling, with said terminal comprising a detector system coupled to said man-machine-interface for detecting voice activity in audio signals and comprising a processing unit coupled to said man-machine-interface for processing audio signals and comprising a buffer coupled to said processing unit for buffering processed audio signals for generating information blocks to be sent to said network, and with said network comprising a network-generator for generating further information blocks and comprising a network-combiner for combining said information blocks with said further information blocks for creating an information stream for said speech recognizer.

2. Telecommunication system according to claim 1, **characterised in that** said detector system comprises a voice activity detector for generating voice activity signals and comprises a threshold detector for generating threshold signals representing differences between processed audio signals and comprises a terminal-generator for generating indication signals and comprises a processor for receiving said voice activity signals and said threshold signals and for in response forming information blocks of processed audio signals or threshold signals or indication signals.

3. Telecommunication system according to claim 1 or 2, **characterised in that** said processing unit comprises a preprocessing unit for preprocessing audio signals, with said network comprising a final processing unit for final processing said preprocessed audio signals.

4. Terminal for use in a telecommunication system comprising said terminal for speech communication and comprising a network with a speech recognizer coupled via a coupling to said terminal, with said terminal comprising a man-machine-interface for converting audio into audio signals, **characterised in that** said coupling comprises a packet-switched coupling, with said terminal comprising a detector system coupled to said man-machine-interface for detecting voice activity in audio signals and comprising a processing unit coupled to said man-machine-interface for processing audio signals and comprising a buffer coupled to said processing unit for buffering processed audio signals for generating information blocks to be sent to said network.

5. Terminal according to claim 4, **characterised in that** said detector system comprises a voice activity detector for generating voice activity signals and comprises a threshold detector for generating threshold signals representing differences between processed audio signals and comprises a terminal-generator for generating indication signals and comprises a processor for receiving said voice activity signals and said threshold signals and for in response forming information blocks of processed audio signals or threshold signals or indication signals.

6. Terminal according to claim 5, **characterised in that** said processing unit comprises a preprocessing unit for preprocessing audio signals.

7. Network for use in a telecommunication system comprising a terminal for speech communication and comprising a network with a speech recognizer coupled via a coupling to said terminal, **characterised in that** said coupling comprises a packet-switched coupling, with said terminal being adapted to send information blocks to said network, and with said network comprising a network-generator for generating further information blocks and comprising a network-combiner for combining said information blocks with said further information blocks for creating an information stream for said speech recognizer.

8. Detector system for use in a terminal for speech communication which terminal comprises a man-machine-interface for converting audio into audio signals, **characterised in that** said terminal comprises said detector system coupled to said man-machine-interface for detecting voice activity in audio signals and comprises a processing unit coupled to said man-machine-interface for processing audio signals and comprises a buffer coupled to said processing unit for buffering processed audio signals for generating information blocks to be sent to said network, with said said detector system comprising a voice activity detector coupled to said man-machine-interface for generating voice activity signals and comprising a threshold detector coupled to said processing unit for generating threshold signals representing differences between processed audio signals and comprising a terminal-generator for generating indication signals and comprising a processor for receiving said voice activity signals and said threshold signals and for in response forming information blocks of processed audio signals or threshold signals or indication signals.

9. Speech recognizer for use in a network to be coupled via a coupling to a terminal for speech communication, **characterised in that** said coupling comprises a packet-switched coupling, with said terminal being adapted to send information blocks to said speech recognizer, and with said speech recognizer comprising a network-generator for generating further information blocks and comprising a network-combiner for combining said information blocks with said further information blocks for creating an information stream.

10. Method for use in a telecommunication system comprising a terminal for speech communication and comprising a network with a speech recognizer coupled via a coupling to said terminal, with said terminal comprising a man-machine-interface for converting audio into audio signals, **characterised in that** said coupling comprises a packet-switched coupling, with said method comprising a first step of in said terminal detecting voice activity in audio signals and a second step of in said terminal processing audio signals and a third step of in said terminal buffering processed audio signals for generating information blocks to be sent to said network and a fourth step of in said network generating further information blocks and a fifth step of in said network combining said information blocks with said further information blocks for creating an information stream for said speech recognizer.
